# EUROPEAN PATENT SPECIFICATION

(11) **EP 3 826 335 B1**
(45) Date of publication and mention of the grant of the patent: **14.10.2026**
(21) Application number: 19210865.2
(22) Date of filing: 22.11.2019
(51) Int. Cl.: H04W 4/46, H04W 4/021, H04L 67/52

(54) **CONTROL UNIT, VEHICLE AND METHOD FOR ADJUSTMENT OF A PARAMETER OF A VEHICLE**
STEUERUNGSEINHEIT, FAHRZEUG UND VERFAHREN ZUR ANPASSUNG EINES PARAMETERS EINES FAHRZEUGS
UNITÉ DE COMMANDE, VÉHICULE ET PROCÉDÉ DE RÉGLAGE D'UN PARAMÈTRE D'UN VÉHICULE

(43) Date of publication of application: 26.05.2021
(73) Proprietor: Volkswagen AG, 38440 Wolfsburg (DE)
(72) Inventor: Pfadler, Andreas, 13359 Berlin (DE); Jornod, Guillaume, 10245 Berlin (DE)

(56) References cited:
- WO-A1-2018/128946
- US-A1- 2017 160 742
- US-A1- 2019 178 988
- "Intelligent Transport System (ITS); Vulnerable Road Users (VRU) awareness; Part 1: Use Cases definition; Release 2", vol. ITS WG1, no. V2.1.1, 4 September 2019 (2019-09-04), pages 1 - 74, XP014355652, Retrieved from the Internet <URL:http://www.etsi.org/deliver/etsi_tr/103300_103399/10330001/02.01.01_60/tr_10330001v020101p.pdf> [retrieved on 20190904]

## Description

Generally, the invention pertains to a control unit, a vehicle and a method for adjustment of a parameter of a vehicle.

In the context of automated driving, the perception of the environment may be important. In particular, this applies for higher levels of automated driving, such as level L4 and L5.

It is therefore well known that automated driving (AD) vehicles sense or scan their surroundings or detect them by sensors. For example, the AD vehicle can scan its environment itself, whereby the environment can typically have static and dynamic objects. Static objects are, e.g., trees, light signs, traffic signs, etc. which can also be known, for example, by map data. Non-static or dynamic objects are, e.g., moving objects, people, animals, other vehicles, etc.

An AD vehicle can drive in regions where, for example, more dynamic objects are present than in its typical location or area in which it otherwise moves, thereby increasing the dynamics in the environment compared to the current location. Accordingly, the automated vehicle should be able to cope with such an elevated dynamic (future) environment.

The knowledge of the dynamics in an environment may also play an important role for so-called tele-operated driving (ToD) applications, where e.g. a human operator receives a livestream from a vehicle and controls the vehicle or supports the control. The remote sensing scheme (and, thus, uplink) can depend on the dynamics of the environment. Hence, a data rate can be reduced if the objects in the environment are less dynamic (less or uncritical environment), e.g. by using a slim uplink where less data is transferred over the uplink. In addition, the control scheme (e.g. direct or indirect control) of the ToD vehicle may also depend on the environment (e.g. downlink).

From prior art document US 2019/0065810 A1 a perception module is known in a spatial monitoring system, which is provided in an automated driving vehicle. The perception module processes data indicative of an associated driving scenario for the automated vehicle to determine an actual spatial environment for the driving scenario and an estimated spatial environment for the driving scenario for the automated vehicle. The actual and estimated spatial environments are compared to each other to determine a malfunction of the perception module. The estimated spatial environment contains, for example, a position of the road and traffic lane, a classification and position of objects and obstacles, and a predicted motion and behavior of the objects. A disadvantage of this technology is that the dynamic development in the (future) environment is not considered.

From US patent application US 2017/0132334 A1 automated vehicles and in particular a service platform or fleet manager for such vehicles is known. For example, a request can be sent to a tele-operator via the service platform in order to support the automated vehicle, whereby this request can also be sent automatically, e.g. based on planning data for a distance to be covered by the automated vehicle. The fleet manager may establish policies for automated vehicles, which may take into account in particular when the automated vehicle enters an area of restricted communication capability. Here, too, the disadvantage is that the dynamic development in the (future) environment is not considered.

From patent application publication WO 2018/128946 A1, a method for providing vulnerable road user warnings in a blind spot of a parked vehicle is known.

A method for configuring a perception component of a vehicle is known from patent application publication US 2019/0178998 A1.

Patent application publication US 2017/0160742 describes an autonomous vehicle with a communication system to communicate with a backend system and a processor to determine a location and an orientation of the autonomous vehicle within a given region,

The object of the present invention is to provide a control unit, a vehicle and a method, which at least partially overcome the disadvantages mentioned above.

This object is solved by the control unit of claim 1, the vehicle of claim 10 and the method of claim 11.

According to a first solution, the present disclosure provides a control unit for a vehicle, wherein the control unit is configured to:
receive a message which is indicative for dynamics of objects in a predetermined region which coincides with a path of the vehicle; and
adjust a parameter of the vehicle based on the received message.

According to a second solution, the present disclosure provides a vehicle including a control unit according to the first aspect.

According to a third solution, the present disclosure provides a method for adjustment of a parameter of a vehicle, based on predicted dynamics of objects in a predetermined region, the method comprising:
receiving a message which is indicative for dynamics of objects in a predetermined region;
predicting dynamics of objects in the predetermined region; and
adjusting a parameter of the vehicle based on the predicted dynamics of objects in the predetermined region.

Further advantageous aspects of the present invention are set forth in the dependent claims, the drawings and the following description of preferred embodiments.

In the light of the introductory technical background, it was recognized that the dynamics of an environment can have an important influence on the communication system. For example, the more objects are in motion, the more the communication may need to be adapted. For example, an automated vehicle must not only adapt its driving behavior in this case, but also its communication settings. Furthermore, the awareness of the control may be higher in environments or regions which multiple high dynamic objects, in order to be able to cope with such a situation.

An environment or region with very high dynamics can mean, e.g. with regard to prediction, that there is a strong Doppler effect that can negatively influence future quality of service. Accordingly, it may be necessary to adapt an application that communicates e.g. via an air interface accordingly.

It was further recognized that the priori knowledge of the dynamics of an environment for automated driving (AD) vehicles is to enable them to adapt their driving mode, perception, attention, sensors (e.g. the sampling rate), communication behavior and the like for a future environment or region, as will be also explained in more detail further below.

In general, perception sharing, in which, for example, perception data is shared between different vehicles, is a known solution for predicting a future driving environment. However, such solutions typically do not measure the dynamic characteristic or feature of the environment. It was recognized that this measurement can be important for AD vehicles so that, for example, the vehicles can adjust their sensors and communication systems and the like for future situations.

Similar to the concept of predictive quality of service (pQoS) in mobile communications, where the quality of a future mobile communication is predicted, this invention, in some embodiments, pertains to a concept where the non-stationary or the dynamics of objects in an environment or region are predicted.

Accordingly, some embodiments pertain to a control unit for a vehicle, wherein the control unit is configured to:
receive a message which is indicative for dynamics of objects in a predetermined region which coincides with a path of the vehicle; and
adjust a parameter of the vehicle based on the received message.

Generally, the vehicle can be any type of vehicle, although some embodiments pertain to motor vehicles, in particular automated and/or tele-operated (motor) vehicles.

The control unit may be a typical vehicle control unit (e.g. included in the motor control unit) or may include or be separately provided in the vehicle. It typically contains one or more processors, main memory, interfaces for communication with sensors, e.g. via a vehicle bus-system, a mobile communications interface, etc.

In some embodiments, the inventive concept is also referred to as predictive dynamics of environment (pDoE). With this information, namely the prediction of the dynamics(s) of objects in an environment or region, the vehicle or control unit, respectively, can advantageously adapt at least one parameter, whereby it can react accordingly to the region or environment into which it will drive in the future through the future path, which coincides with the predetermined region.

In principle, the message can be received in any form, even if in some embodiments the message is received via a mobile radio air interface.

In some embodiments, the message is received from a server (remote computer), where the information indicative of the dynamics of objects in a predetermined region is stored in a database (of the server or of the control unit/vehicle), for example, and upon receipt of a request the information from the database is inserted into a message and transmitted to the control unit of the vehicle.

In other embodiments, as will also be discussed further below, the message will be received from other vehicles or objects.

The objects or information indicative of the objects can also be stored in the database or at least the information about the dynamics of the objects. This information origins, for example, from other vehicles which detect objects via sensors and also, for example, the speed, e.g. whether they are static or dynamic objects, and the like and transmit this information to the central server (or in other embodiments to the vehicle/control unit). The central server (or the servers in a distributed system) then predicts the (future) dynamics of the objects in a specific or given area based on the information. In some embodiments, the (central) server only summarizes or clusters the dynamics of the objects in the specified region when, for example, it receives a corresponding request from the control unit to communicate the predicted dynamics in the predetermined region.

In some embodiments, the parameter is indicative of a sensor sampling rate that is adapted, which has the advantage that, for example, with high dynamics, the data volume can be reduced by reducing the sensor sampling rate, which can relieve a transmission rate for transmitting the sensor data to the central server and/or an internal data load in the control unit or in the vehicle system (e.g. data volume in the vehicle bus). On the other hand, the sampling rate may be increased in some occasions, in order to better address that fact the many high dynamic objects are in the predetermined region, such thereby the detection accuracy of the objects may be improved and also an overall safety feature of the AD vehicle may be increased.

In addition, the parameter can be indicative of a sensor resolution, which can also have the advantage of reducing the amount of data. The sensor resolution can be achieved, for example, with a camera by reducing the pixels, with sensors that contain several sub-sensors, sub-sensors can be switched off, etc. On the other hand, also here the sensor resolution may be increased in the case of high dynamic regions, e.g., in order to increase a detection accuracy of objects.

The parameter can be indicative of a communication setting, e.g. a transmission power, a transmission rate, a transmission time or period, or the like, which has the advantage of reducing a data amount and/or energy consumption or that, for example, in the case of tele-operated driving the transmission rate or period may be increased, etc.

The parameter can also be indicative of an environment model, so that, for example, the type of model, an update rate or the like can be advantageously adapted to the predicted dynamics and thus a data rate can be reduced.

The parameter may also be indicative of a driving mode so that a driving speed, an engine mode (e.g. sports mode, eco mode or the like) or the like can be advantageously adapted and in the case of a tele-operated driving (ToD) vehicle a suitable ToD mode can be selected.

In some examples, all the parameters mentioned above or any combination of them are also provided.

In some embodiments, the control unit receives the message via a mobile communications network, whereby the mobile communications network corresponds to the 2G, 3G, 4G or 5G standard, for example, without restricting the present invention in this respect to a specific mobile communications standard. Transmission via the mobile network has the advantage that the vehicle can always receive messages as soon as it is in a corresponding coverage area. The vehicle or control unit may have an appropriate radio interface for receiving the message.

In some embodiments, the parameter is also indicative of a transmission rate of a mobile communications channel, so that it is advantageous to select a mobile communications channel with a higher or lower transmission rate according to the predicted dynamics or to select a predefined transmission channel. Accordingly, in some embodiments, the control unit is set up to select a predefined mobile communication channel based on the received message.

In some embodiments, the control unit is further configured to request the message for the predetermined region. This has the advantage that only the information that is relevant for the given region into which the vehicle will drive in the future is requested. This can reduce the amount of data and the processing time.

The control unit can also be configured to predict the future path of the vehicle and to request the message for the predetermined region on the basis of the predicted future path. This allows the control unit, for example, to adjust through which regions the vehicle drives and, based on this, to request the message if necessary. For example, there may be regions where no high dynamics can be expected (e.g. on field paths, in sparsely populated areas), etc.

In some embodiments, the control unit is further configured to transmit the path of the vehicle, e.g. to another vehicle and/or to a server or remote computer. The receiving entity, e.g. the vehicle or server, can then determine on the basis of the transmitted path, whether it has information, e.g. about objects and their dynamics in regions which coincide with the path, wherein the entity can then transmit a message including the respective information to the requesting control unit (or vehicle). Thereby, the control unit can advantageously collect information about the dynamics of objects from different sources.

In some embodiments, the message is indicative of a number of objects within in a dynamic cluster. Different dynamic clusters can, for example, specify the speed or dynamic range in which the dynamics of the different objects are. This has the advantage that the message has to contain only few information, e.g. only the number of contained objects for each dynamic cluster, which reduces the amount of data transfer. The dynamic clusters themselves can, for example, be fixed, so that both the control unit and the server know the clusters in advance. However, the dynamic clusters can also be defined dynamically or at given times

In some embodiments, the control unit is further configured to cluster objects in dynamic clusters, which has the advantage that the control unit has to process less data and the prediction of the dynamics may be simplified.

In some embodiments, the vehicles (control units) may communicate directly with each other, i.e. without involving any base station transceiver, which is also referred to as Device-to-Device (D2D) communication. An example of D2D is direct communication between vehicles, also referred to as Vehicle-to Vehicle communication (V2V), car-to-car, DSRC, respectively. Technologies enabling such D2D-communication include 802.11p, 3GPP system (4G, 5G, NR and beyond), etc.

Hence, in some embodiments, the control unit is further configured to receive the message via a sidelink to at least one other vehicle. The sidelink may be established wirelessly, e.g. according to WiFi-standard or based on mobile communications, e.g. in accordance with LTE, LTE-A or also 5G, which allows to have a vehicle-to-vehicle over which data can be transmitted. In such cases, the control unit can receive messages directly from other vehicles which are in a certain range around the control unit, e.g. 500 m, without limiting the present embodiment to this specific range.

As discussed above, in some embodiments, a server or remote computer is configured to predict the dynamics of objects in an environment, and, thus, in a predetermined region (also referred to as centralized approach) and, for example, to transmit the prediction result in the message. However, in some embodiments, the control unit is further configured to predict the dynamics of objects in the predefined region (also referred to as decentralized approach). Of course, in some embodiments, the two approaches are also mixed. For instance, the decentralized approach may also be used in cases, where no communication to a central server is possible, e.g. due to overload, missing radio coverage or the like. Furthermore, the decentralized approach has the advantage that no central structure, e.g. server, or the like is needed.

In some embodiments, the control unit is further configured to define the predetermined region. For instance, the control unit can determine or define the size, shape or the like of the regions based on the future path, so that the message also contains only information about the predicted dynamics in the given/predetermined region(s). For example, a region for a motorway can essentially correspond to the shape of the motorway, whereas in a city, the predetermined region can be circular or rectangular and cover a larger region surrounding the control unit/vehicle, e.g. several crossroads and their streets, in order to also capture the dynamics in the wider surroundings. Finally, the path in the city can also be adapted more easily, e.g. to current traffic situations than in the case on the motorway, etc., such that in the city it may be advantageous to have regions also covering alternative paths, etc.

Some embodiments pertain to a (motor) vehicle including the control unit described herein, wherein the motor vehicle is, for example, a car with an electric motor and/or a combustion engine, a motorcycle or the like.

Some embodiments pertain to a method for adjustment of a parameter of a vehicle, based on predicted dynamics of objects in a predetermined region, the method comprising:
receiving a message which is indicative for dynamics of objects in a predetermined region;
predicting dynamics of objects in the predetermined region; and
adjusting a parameter of the vehicle based on the predicted dynamics of objects in the predetermined region, as discussed herein.

The method can be performed by the control unit, or it can be partially performed by a server or remote computer.

Moreover, some embodiments pertain to a system which includes at least the control unit (the vehicle including the control unit) and a server and/or multiple vehicles, as discussed herein.

In the following, embodiments of the present invention are described under reference of accompanied drawings, in which:
Fig. 1 schematically illustrates different regions with different dynamics and shows a path of a vehicle;
Fig. 2 shows a curve of how dynamics change on the path;
Fig. 3 schematically illustrates an embodiment of a system according a centralized approach;
Fig. 4 schematically illustrates different shapes of regions;
Fig. 5 schematically illustrates an embodiment of a system according a decentralized approach;
Fig. 6 is a flowchart of a method.

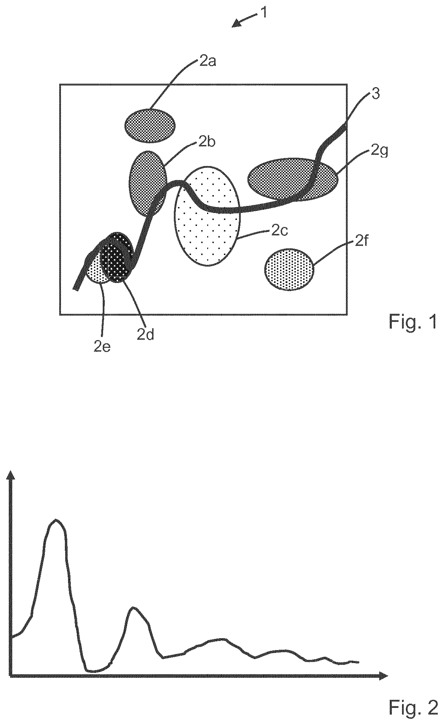

Fig. 1 illustrates a map 1, which is obtained, e.g. in a first step, and contains information about the dynamics in predetermined regions 2a to 2g.

The regions 2a to 2g are shown with different hatching, which symbolizes different dynamics in the regions 2a to 2g. Moreover, Fig. 1 illustrates a (planned) path 3 of a vehicle, which will be followed by the vehicle in the future.

In a second step, the dynamics for the regions 2a to 2g are linked to the future path 3 of the vehicle. The development of the predicted dynamics is also illustrated in Fig. 2, showing on the ordinate the dynamics [m/s] and on the abscissa the path position. As can be taken from Fig. 2, the predicted dynamics change on the path, and, thus, the vehicle can adapt its applications accordingly in dependency of the dynamics in a final step.

As also discussed above, in some embodiments, similar as the concept of predictive quality of service (pQoS) for radio communication, where the quality of the future radio communication is predicted, a concept is introduced where the non-stationariness or dynamics of objects in an environment, such as regions 2a-6, is predicted, which is referred to predictive dynamics of environment (pDoE). With this information a vehicle is able to adapt, for example, its sensors (sampling), environmental model (update rate), driving mode (speed of the ADV), and/or the selection of an appropriate ToD mode, and communication settings such as transmit power, transmission period etc.

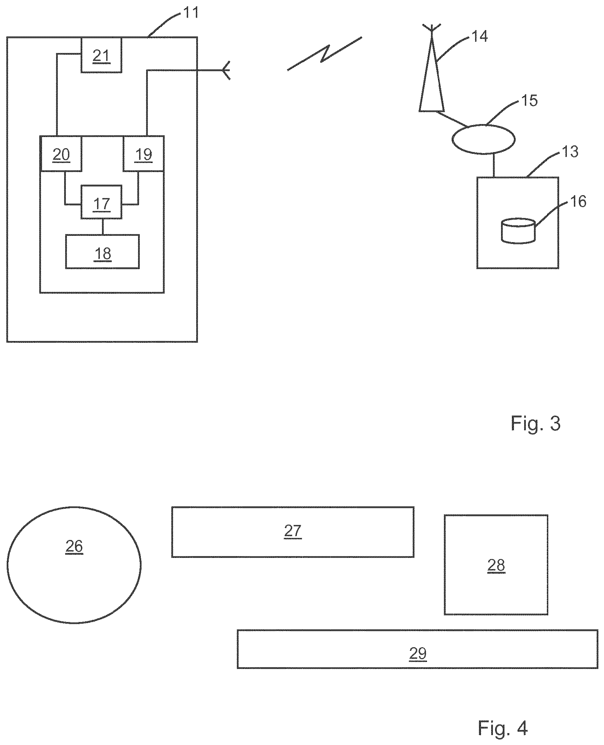

Fig. 3 schematically illustrates an embodiment of a system 10 according a centralized approach.

The system 10 at least includes an AD vehicle 11 including a control unit 12 and a server 13.

The control unit 12 is connected via a mobile communications network to a base station 14, which, in turn, is connected via a network 15 to the server 13.

In this case, the pDoE is managed by the network, i.e. the server 13. Although, in this embodiment only one server 13 is shown, in some embodiment, multiple servers are provided for managing the pDoE.

In the centralized pDoE approach of this embodiment, a database 16 is provided in the server 13 which collects the dynamics of certain regions, including regions 2a-g of Fig. 1. In this embodiments, this data is updated through sensor sharing, e.g., provided by multiple vehicles including sensors for detecting objects and their dynamics.

In the present embodiment, the control unit 12 has a processor 17, a memory 18, a mobile communications interface 19, and a bus-interface 20, which is connected to sensors, such as sensor 21, which is exemplary a LIDAR camera in the present embodiment. Of course, typically, there are multiple sensors provided in the vehicle 11, e.g. which are needed i.a. for providing automated driving, but which are omitted here for the sake of simplicity.

The control unit 12 of the vehicle 11 is configured to determine the path 3 (see Fig. 1), which will be driven by the vehicle 11. For this future path 3, the control unit 12 requests the pDoE from the server 13 via an Uu link of the base station 14 (e.g. LTE-base station).

In this embodiment, the control unit 12 also transmits path data of the path 3 to the server 13, such that the server 13 determines for which regions, such as regions 2a-g, it has dynamic object data. The server 13 performs prediction of the dynamics of the objects in the predetermined regions, e.g. regions 2a-g.

In this embodiments, the measuring of dynamics of an environment/region involves an environmental model which includes objects having different movement profiles.

Hence, in this embodiment, objects are clustered into same movement profiles in certain areas (which are identical with regions in this embodiment, without limiting the present invention in that regard).

Fig. 4 schematically illustrates different example shapes of areas or regions 26 to 29, wherein the size is for all shapes the same (e.g. 100 m², without limiting the present invention in this regard). In this embodiments, the shape and size of the regions or areas 26 to 29 is determined by the server 13.

The server 13 clusters the objects in different dynamic clusters, as also shown in Table 1 below, which exemplary shows five dynamic clusters, wherein the first cluster includes objects, which have a velocity of 0, the second dynamic cluster includes objects having a velocity of 0.1-1 m/s, etc.

For each dynamic cluster, the server 13 determines the number of objects in the predetermined region/area.

**Table 1**

| Dynamic cluster | Dynamics (m/s) | Number of objects |
|---|---|---|
| 1 | 0 | 10 |
| 2 | 0.1-1 | 2 |
| 3 | 1-9 | 5 |
| 4 | 9-20 | 0 |
| 5 | 20-30 | 1 |
| ... | ... | |

In addition or alternatively, in some embodiments, a clustering of objects with a certain direction of motion is performed.

The server 13 includes the information in a message, wherein the message includes the number of the dynamic cluster and the associated number of objects (e.g. (1;10), (2;2), (3; 5) ...).

The meaning of the dynamic clusters is predefined in this embodiment (while in in others, this can be determined by the control unit 12, the server 13 or both).

The control unit 12 receives the message from the server 13 over the mobile communications interface 19 and then adapts its sensors, e.g. sensor 21 (awareness, e.g. sample rate, resolution etc.), its communication, e.g. the transmit rate of the mobile communications interface 19 and its driving mode (e.g. speed).

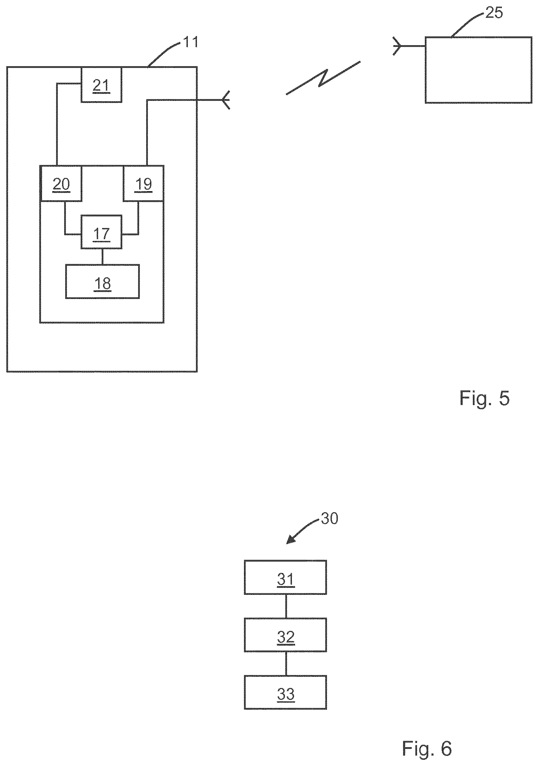

An embodiment according to the decentralized approach is schematically illustrated in Fig. 5. For the sake of simplicity, the vehicle 11 structurally corresponds to the vehicle 11 of Fig. 3, wherein in the present embodiment, the control unit 12 is configured to communicate via a sideline with other vehicle, such as vehicle 25 depicted in Fig. 5.

For the decentralized pDoE approach, the information of the dynamics of future environments is requested or shared via a sidelink in the same fashion as pQoS might be shared for decentralized communication systems.

Thus, vehicle 25 is able to send in the present embodiment a collective perception message (CPM) to vehicle 11 (control unit 12), which contains objects experienced in the same or close environment, which is a sensor sharing massage which shares objects (whereas the pDoE message of the centralized approach of Fig. 3, for example, shares the dynamics of environment for future regions into which the vehicle drives).

The control unit 12 receives the CPM from the vehicle 25 via sidelink which is established over the mobile communications interface 19 between the vehicle 11 and the vehicle 25 and processes the data accordingly.

In this embodiments, the control unit 12 processes the CPM received from the vehicle 25 and other vehicles which are in a surrounding area, e.g. of 500 m.

From that, the control unit 12 takes the information, which objects are present and, for example, which velocity the objects have. Thus, the CPM message are indicative for dynamics of objects in a predetermined region.

On the basis of this information, the control unit 12 performs prediction of the dynamics of objects in the predetermined region (e.g. one or the regions 2a-g) and, then, adjusts a parameter of the vehicle based on the predicted dynamics of objects in the predetermined region 2a-g, wherein, as discussed, the parameter is indicative of at least one of: a sensor sampling rate, a sensor resolution, a communication setting, an environment model and/or a drive model.

In some embodiments, the sharing of the CPM may result in a high communication load, which may not be the case for the centralized approach of the embodiment of Fig. 3.

In this embodiment, the control unit 12 itself determines the predetermined regions. However, in some embodiments, the control unit 12 is configured to transmit path data to the other vehicles 25 and the other vehicles 25 check whether they have information about objects in a region which coincides with that path transmitted by the control unit 12 of the vehicle 11 and transmit corresponding data, e.g. in the form of a CPM message, in the case that it has the requested information.

In the following, an embodiment of a method 30 for adjustment of a parameter of a vehicle, e.g. vehicle 11, is discussed under reference of Fig. 6.

At 31, a message is received which is indicative for dynamics of objects in a predetermined region. For example, in the case of the embodiment of Fig. 3, the control unit 12 receives the message from the server 13 (Fig. 3), whereas in the embodiments of Fig. 5, the control unit 12 receives the CPM message from another vehicle, e.g. vehicle 25.

At 32, the method comprises predicting dynamics of objects in the predetermined region. As discussed, in the centralized approach embodiment of Fig. 3, the server 13 is configured to perform the prediction, such that in this embodiment, typically, this step is performed before step 31. In the case of the decentralized approach embodiment of Fig. 5, the control unit 12 is configured to perform the prediction.

At 33, a parameter of the vehicle is adjusted based on the predicted dynamics of objects in the predetermined region, as discussed herein.

### Reference signs

- 1: map
- 2a-g: regions
- 3: path
- 10: system
- 11: vehicle
- 12: control unit
- 13: server
- 14: base station
- 15: network
- 16: database
- 17: processor
- 18: memory
- 19: mobile communications interface
- 20: bus-interface
- 21: LIDAR camera (sensor)
- 25: vehicle
- 31: receiving message
- 32: predicting dynamics
- 33: adjusting parameter

## Claims

1. A control unit for a vehicle (11), wherein the control unit (12) is configured to:
predict a future path (3) of the vehicle (11);
request, on a basis of the predicted path (3), a message which is indicative for dynamics of objects in a predetermined region (2a-g) which coincides with the predicted path (3) of the vehicle (11);
receive the message via a mobile communications network; and
adjust a parameter of the vehicle (11) based on the received message, wherein the parameter is indicative of a transmission rate of a mobile communications channel.

2. The control unit of claim 1, wherein the parameter is indicative of at least one of: a sensor sampling rate, a sensor resolution, a communication setting, an environment model and/or a drive model.

3. The control unit of claim 1 or 2, wherein the control unit (12) is further configured to select a predetermined mobile communications channel, based on the received message.

4. The control unit of anyone of the previous claims, wherein the control unit (12) is further configured to transmit the path of the vehicle.

5. The control unit of anyone of the previous claims, wherein the message is indicative of a number of objects within a dynamic cluster.

6. The control unit of anyone of the previous claims, wherein the control unit (12) is further configured to cluster objects in dynamic clusters.

7. The control unit of anyone of the previous claims, wherein the control unit (12) is further configured to receive the message via a sidelink to at least one other vehicle (25).

8. The control unit of anyone of the previous claims, wherein the control unit (12) is further configured to predict the dynamics of objects in the predefined region (2a-g) and/or wherein the message includes a prediction of the dynamics of objects in the predefined region (2a-g).

9. The control unit of anyone of the previous claims, wherein the control unit (12) is further configured to define the predetermined region (2a-g).

10. A vehicle (11) including a control unit (12) according to anyone of the previous claims.

11. A method (30) for adjustment of a parameter of a vehicle, based on predicted dynamics of objects in a predetermined region, the method performed by a control unit of the vehicle and comprising:
predicting a future path of the vehicle;
requesting, on a basis of the predicted path, a message which is indicative for dynamics of objects in the predetermined region which coincides with the predicted path of the vehicle;
predicting (32) dynamics of objects in the predetermined region;
receiving (31) the message via a mobile telecommunications network; and
adjusting (33) a parameter of the vehicle based on the predicted dynamics of objects in the predetermined region, wherein the parameter is indicative of a transmission rate of a mobile communications channel.

## Patentansprüche

1. Steuereinheit für ein Fahrzeug (11), wobei die Steuereinheit (12) konfiguriert ist zum:
Vorhersagen eines zukünftigen Pfads (3) des Fahrzeugs (11);
Anfordern, auf einer Basis des vorhergesagten Pfads (3), einer Nachricht, die eine Dynamik von Objekten in einer vorbestimmten Region (2a-g) angibt, die mit dem vorhergesagten Pfad (3) des Fahrzeugs (11) zusammenfällt;
Empfangen der Nachricht über ein Mobilkommunikationsnetz; und
Anpassen eines Parameters des Fahrzeugs (11) basierend auf der empfangenen Nachricht, wobei der Parameter eine Übertragungsrate eines Mobilkommunikationskanals angibt.

2. Steuereinheit nach Anspruch 1, wobei der Parameter mindestens eines angibt von: einer Sensorabtastrate, einer Sensorauflösung, einer Kommunikationseinstellung, einem Umgebungsmodell und/oder einem Antriebsmodell.

3. Steuereinheit nach Anspruch 1 oder 2, wobei die Steuereinheit (12) ferner konfiguriert ist, um einen vorbestimmten Mobilkommunikationskanal basierend auf der empfangenen Nachricht auszuwählen.

4. Steuereinheit nach einem der vorstehenden Ansprüche, wobei die Steuereinheit (12) ferner konfiguriert ist, um den Pfad des Fahrzeugs zu übertragen.

5. Steuereinheit nach einem der vorstehenden Ansprüche, wobei die Nachricht eine Anzahl von Objekten innerhalb eines dynamischen Clusters angibt.

6. Steuereinheit nach einem der vorstehenden Ansprüche, wobei die Steuereinheit (12) ferner konfiguriert ist, um Objekte in dynamischen Clustern zu clustern.

7. Steuereinheit nach einem der vorstehenden Ansprüche, wobei die Steuereinheit (12) ferner konfiguriert ist, um die Nachricht über einen Sidelink zu mindestens einem anderen Fahrzeug (25) zu empfangen.

8. Steuereinheit nach einem der vorstehenden Ansprüche, wobei die Steuereinheit (12) ferner konfiguriert ist, um die Dynamik von Objekten in der vordefinierten Region (2a-g) vorherzusagen, und/oder wobei die Nachricht eine Vorhersage der Dynamik von Objekten in der vordefinierten Region (2a-g) einschließt.

9. Steuereinheit nach einem der vorstehenden Ansprüche, wobei die Steuereinheit (12) ferner konfiguriert ist, um die vorbestimmte Region (2a-g) zu definieren.

10. Fahrzeug (11), das eine Steuereinheit (12) nach einem der vorstehenden Ansprüche einschließt.

11. Verfahren (30) für eine Anpassung eines Parameters eines Fahrzeugs basierend auf der vorhergesagten Dynamik von Objekten in einer vorbestimmten Region, wobei das Verfahren durch eine Steuereinheit des Fahrzeugs durchgeführt wird und umfassend:
Vorhersagen eines zukünftigen Pfads des Fahrzeugs;
Anfordern, auf einer Basis des vorhergesagten Pfads, einer Nachricht, die die Dynamik von Objekten in der vorbestimmten Region angibt, die mit dem vorhergesagten Pfad des Fahrzeugs zusammenfällt;
Vorhersagen (32) der Dynamik von Objekten in der vorbestimmten Region;
Empfangen (31) der Nachricht über ein mobiles Mobiltelekommunikationsnetz; und
Anpassen (33) eines Parameters des Fahrzeugs basierend auf der vorhergesagten Dynamik von Objekten in der vorbestimmten Region, wobei der Parameter eine Übertragungsrate eines Mobilkommunikationskanals angibt.

## Revendications

1. Unité de commande destinée à un véhicule (11), dans laquelle l'unité de commande (12) est configurée pour :
prédire un trajet (3) futur du véhicule (11) ;
demander, en fonction du trajet (3) prédit, un message qui indique la dynamique d'objets dans une région prédéterminée (2a-g) qui coïncide avec le trajet (3) prédit du véhicule (11) ;
recevoir le message par l'intermédiaire d'un réseau de communications mobiles ; et
ajuster un paramètre du véhicule (11) en fonction du message reçu, dans laquelle le paramètre indique un débit de transmission d'un canal de communications mobiles.

2. Unité de commande selon la revendication 1, dans laquelle le paramètre indique au moins l'un parmi : un débit d'échantillonnage de capteur, une résolution de capteur, un réglage de communication, un modèle d'environnement et/ou un modèle de conduite.

3. Unité de commande selon la revendication 1 ou 2, dans laquelle l'unité de commande (12) est configurée en outre pour sélectionner un canal de communications mobiles prédéterminé, en fonction du message reçu.

4. Unité de commande selon l'une quelconque des revendications précédentes, dans laquelle l'unité de commande (12) est configurée en outre pour transmettre le trajet du véhicule.

5. Unité de commande selon l'une quelconque des revendications précédentes, dans laquelle le message indique un nombre d'objets au sein d'un regroupement dynamique.

6. Unité de commande selon l'une quelconque des revendications précédentes, dans laquelle l'unité de commande (12) est configurée en outre pour regrouper des objets dans des regroupements dynamiques.

7. Unité de commande selon l'une quelconque des revendications précédentes, dans laquelle l'unité de commande (12) est configurée en outre pour recevoir le message par l'intermédiaire d'une liaison latérale vers au moins un autre véhicule (25).

8. Unité de commande selon l'une quelconque des revendications précédentes, dans laquelle l'unité de commande (12) est configurée en outre pour prédire la dynamique d'objets dans la région prédéfinie (2a-g) et/ou dans laquelle le message comporte une prédiction de la dynamique d'objets dans la région prédéfinie (2a-g).

9. Unité de commande selon l'une quelconque des revendications précédentes, dans laquelle l'unité de commande (12) est configurée en outre pour définir la région prédéterminée (2a-g).

10. Véhicule (11) comportant une unité de commande (12) selon l'une quelconque des revendications précédentes.

11. Procédé (30) destiné à l'ajustement d'un paramètre d'un véhicule, en fonction de la dynamique d'objets prédite dans une région prédéterminée, le procédé étant mis en œuvre par une unité de commande du véhicule et comprenant :
la prédiction d'un trajet futur du véhicule ;
la demande, en fonction du trajet prédit, d'un message qui indique une dynamique d'objets dans la région prédéterminée qui coïncide avec le trajet prédit du véhicule ;
la prédiction (32) de dynamique d'objets dans la région prédéterminée ;
la réception (31) du message par l'intermédiaire d'un réseau de télécommunications mobiles ; et
l'ajustement (33) d'un paramètre du véhicule en fonction de la dynamique d'objets prédite dans la région prédéterminée, dans lequel le paramètre indique un débit de transmission d'un canal de communications mobiles.
